**Europäisches Patentamt**

**European Patent Office**

**Office européen des brevets**

(19)

(11) Publication number: **0 029 246**

**B1**

(12) 

# EUROPEAN PATENT SPECIFICATION

(45) Date of publication of patent specification: **24.08.83**

(51) Int. Cl.³: **H 04 M 11/06**

(21) Application number: **80107128.3**

(22) Date of filing: **18.11.80**

(54) System for the broadcast of information by means of the telephone network.

(30) Priority: **19.11.79 IT 6923279**

(43) Date of publication of application:
**27.05.81 Bulletin 81/21**

(45) Publication of the grant of the patent:
**24.08.83 Bulletin 83/34**

(84) Designated Contracting States:
**BE CH DE FR GB LI NL SE**

(56) References cited:
**WO - A - 80/00757**

**PROCEEDINGS OF THE NATIONAL ELECTRONICS CONFERENCE, vol. 33, 29th-31st October 1971, pages 488—494 Publisher: National Engineering Consortium Inc. Oak Brook, Illinois E.J. CLAIRE: "Vidon a new multiple service system for the existing telephone local loop"**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Artom, Auro**
**Via Sacchi 28 bis**
**Torino (IT)**

(74) Representative: **Riederer Freiherr von Paar zu Schönau, Anton**
**Freyung 615 Postfach 2664**
**D-8300 Landshut (DE)**

## System for the broadcast of information by means of the telephone network

The present invention relates to information broadcast, and more particularly it refers to a system for receiving information from a data bank by means of the telephone network via the subscriber telephone loops which extend between the subscribers' sets and an exchange, in a frequency band outside the speech frequency band independently of and, if required, at the same time as the usual telephone traffic, wherein at both ends of each of the loops an information separating or combining filter, respectively, connects the loop for the outside of speech frequency band to a first or a second modem, respectively.

A number of systems are well known for the broadcast of information allowing alphanumeric digits or drawings to be visualized separately or in conjunction with the television program on duly adapted television sets or on suitable terminals.

Some of the known systems (such as Teletext) are based on signal broadcasting, others (such as Viewdata, known also as Prestel) make use of connections of telephone kind on switched basis.

While the former must have a finite number of information as they depend on a system of television kind exploited for a short time, the latter have practically unlimited capacity of information as they carry out a service on switched basis towards a great quantity of possible information sources; in addition these systems allow an interactive dialogue with the information source as by telephone connection a full-duplex channel is established between subscriber and data exchange.

However these systems that utilize connections of telephone type present various disadvantages, among which:
— possible overload of data-base due to a lot of simultaneous information requests with consequent overdimensioning both of the devices interfacing the data-base, and of the same data-base in order to satisfy a large number of requests;
— overload of the switched telephone network with subsequent overdimensioning of all the devices interested in the information service;
— impossibility, in most cases, to make the information service and the usual telephone service work at the same time at the subscriber's terminal, that is why as long as the subscriber's line is seized in the information exchange neither can the subscriber be called up nor can he use the telephone set without interrupting the information service;
— charge difficulties or anyway difficulties in the payment of a charge for the service. In fact in the systems that make use of the switched telephone network any subscriber can attain the information service, unless he can then be refused if he has no right to it. This involves in any case useless occupation of telephone lines and data-base. It is also clear that for systems based on transmission via radio the service charge is practically impossible;
— difficulty in the connection with specialized data networks, such as packet-switched networks, due to the overload deriving to the telephone exchange and to the fact that often the quality of the required connection is difficult to obtain on all the switched telephone network.

Particularly, a viewdata system had been described in Proceedings of the National Electronics Conference, Vol. 33, 29-31.10.71, pages 488 to 494 (E. J. Claire: Vidon a new multiple service system for the existing telephone local loop). According to this prior art, only one twisted pair is used to link the subscriber to the central office for both the telephone and the data services. The data are transmitted at a frequency band above the voice band. The data services comprise fire and burglar alarm surveillance, digital data service and other, i.e. such services the reliability of which is rather important. The system works in a manner that the usual telephone service and the additional services can be used independent from each other, e.g. simultaneously.

The prior art system is a viewdata system which has the characteristic that a user has to gain access to a bus which distributes the data and then engages this bus, with the resulting mentioned disadvantages particularly relating to possible overload condition and congestion.

Thereagainst, the invention is to solve the problem that the services to be offered by the system do not suffer from possible overload conditions.

This problem is solved by the invention which is characterized in that the information which is subdivided into individual pages each identified by its own address is cyclically broadcast by the data bank onto a single bus common to all subscribers, the bus being connected to each of the respective second modems via a selecting buffer device having means for temporarily storing the subsequent pages of the information on the bus, receiving from the subscriber via the modems and the loop the address of a selected page, keeping only the selected page and sending at low speed said page to the subscriber.

The invention, thus, provides for a cyclical broadcast system wherein the user has not to gain access to the bus which distributes the data but has only to send the address of the wanted page of the information without engaging the bus. Similar as in the prior art, the usual telephone service and the data service are effected independent from each other and, if necessary, at the same time. The service also permits data exchange from and towards a specialized data-network by means of as many bidirectional connections as the served subscribers are, said connections being directly connected to a first modem, as well as the broadcast of information coming, by means of a single bus, common to all the served subscribers, from a data-base. The system of the invention does not present problems concerning the congestion and quality of the connection as to the carrying out of the service of reception of an information broadcast. In addition, the system allows, the broadcast of information that, as it can be required at the same time by a large number of subscribers (e.g. commercial news, newspaper etc.), can be conveniently supplied only by a local broadcasting system. It, in case of information broadcasting, sends on the subscriber's telephone line at low speed just the portion of information required by the same subscriber and not the global information flow at high speed (as in Teletext case). The system further allows a subscriber connected to a service of information exchange an exchange with specialized data networks and viceversa.

The invention and particularly the features of claim 2, further, allow to easily effect charges according to differentiated rates for service types, due to the fact that at the line circuit of the telephone exchange detailed data are available relating to the characteristics of the required information. By placing the selecting buffer device in the exchange, the user, further, is not given a chance to tamper with it for avoiding the charge.

With reference to the selecting buffer device, a new and useful circuit arrangement thereof is characterized in claim 3.

The foregoing and other characteristics of the present invention will become clearer from the following description of a particular embodiment thereof, given by way of example and not in a limiting sense, taken in connection with the annexed drawings in which:

Fig. 1 represents a general scheme of a system of information broadcasting, object of the invention;

Fig. 2 is a scheme of a detail of the block denoted by R in Fig. 1.

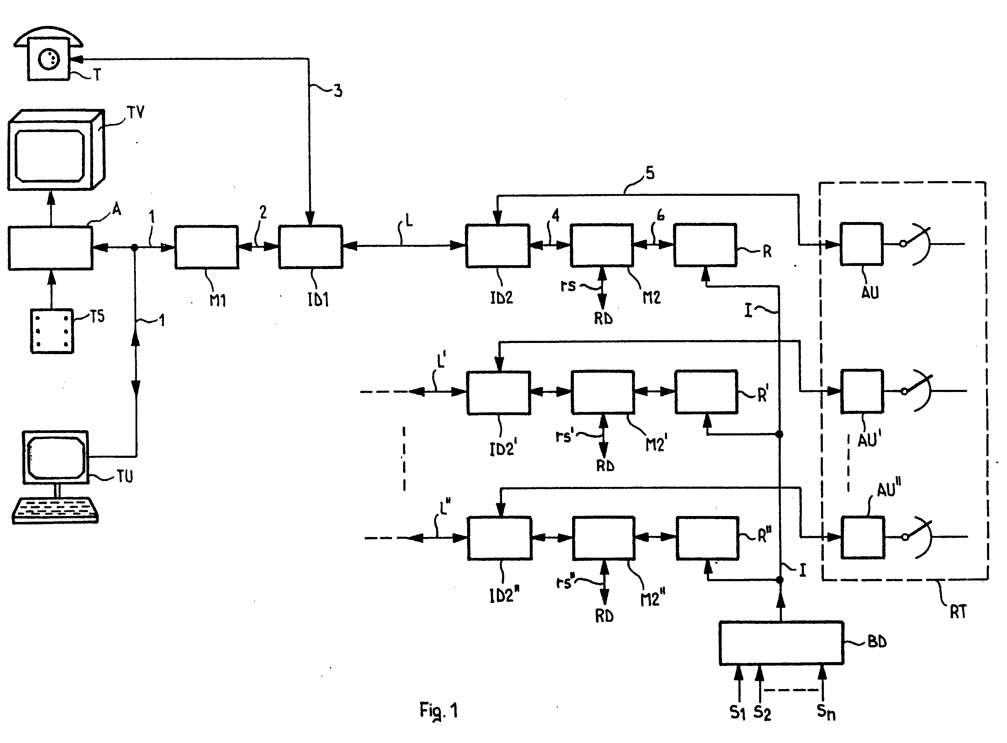

In Fig. 1, reference T denotes a usual subscriber's telephone set; reference TV denotes a commercially available television set of any kind; reference TS denotes a usual keyboard connected to an adapter denoted by A connected also to television set TV; reference TU denotes a terminal of any known type.

Adapters of type A are well known in the technique and generally consist of a television frame memory able to store a page of information under the format of characters or marks, of a generator of a television representation of the character or mark, and of a television modulator able to generate a signal that can be directly acceptable to the home television set.

By way of example adapter A can be of the type adopted in the system of Viewdata information previously mentioned.

Reference M1 denotes a modem operating in full-duplex for instance at 8 Kbit/s.

Unlike the analogous modem used in the system Viewdata, that, as it accesses the switched telephone network, is in speech-band, M1 is a modem operating in a band different from the speech one in order not to interfere with the usual telephone calls that can occur at the same time as the information broadcasting.

M1 is connected on one side to adapter A and to terminal TU through a bidirectional connection 1, and on the other one to circuit ID1, that will be defined hereinafter.

The embodiment of a modem such as M1 is not a problem to the skilled in the art as, for instance the use is sufficient of a modulator and of a demodulator of type FSK, of any known type, by placing in a band of frequency different from the speech one the two transmitting and receiving channels.

Reference ID1 denotes a usual circuit for data insertion and separation bidirectionally connected to modem M1, to subscriber's telephone line L and to the telephone apparatus T, by means of connection 3.

Circuit ID1, that in the following will be simply referred to as "inserting circuit", is able to superimpose on the same subscriber's line L the telephone signals it receives from telephone apparatus T, by means of connection 3, with the information signals coming from modem M1 by means of connection 2; viceversa ID1 is apt to separate from the flow of information and speech, coming from line L, the information to be forwarded to modem M1 and the telephone signal to be forwarded to telephone set T by means of connection 3.

Said separation can be easily carried out owing to the different frequency band utilized for the two kinds of signals.

By way of example, circuits like ID are generally used in the broadcast system.

It has now to be outlined that the telephone line denoted by L is only the usual subscriber's line (loop) connecting the subscriber to its telephone exchange; according to the present invention both signals of the telephone kind and signals of the service of broadcast (and exchange of) information can be contemporaneously present on L.

Reference L', L" denotes, by way of example, two further telephone lines, among those connected to the telephone exchange, that are connected to two subscribers.

Reference ID2 denotes an insertion circuit perfectly analogous to and, as to functions, complementary with circuit ID1 already examined; references ID2', ID2" denote two insertion circuits perfectly identical to ID2.

ID2 is apt to overlap on the same subscriber's line L the telephone signals, it receives from line circuit AU of the telephone exchange denoted by RT, with the signals of broadcast or exchange of information coming, through connection 4, from a modem M2 analogous to and complementary with M1, viceversa ID2 is capable of separating from the speech and information flow coming from line L, the information to be forwarded to modem M2 and the telephone signal to be forwarded towards the switching exchange RT, through connection 5 and line circuit AU.

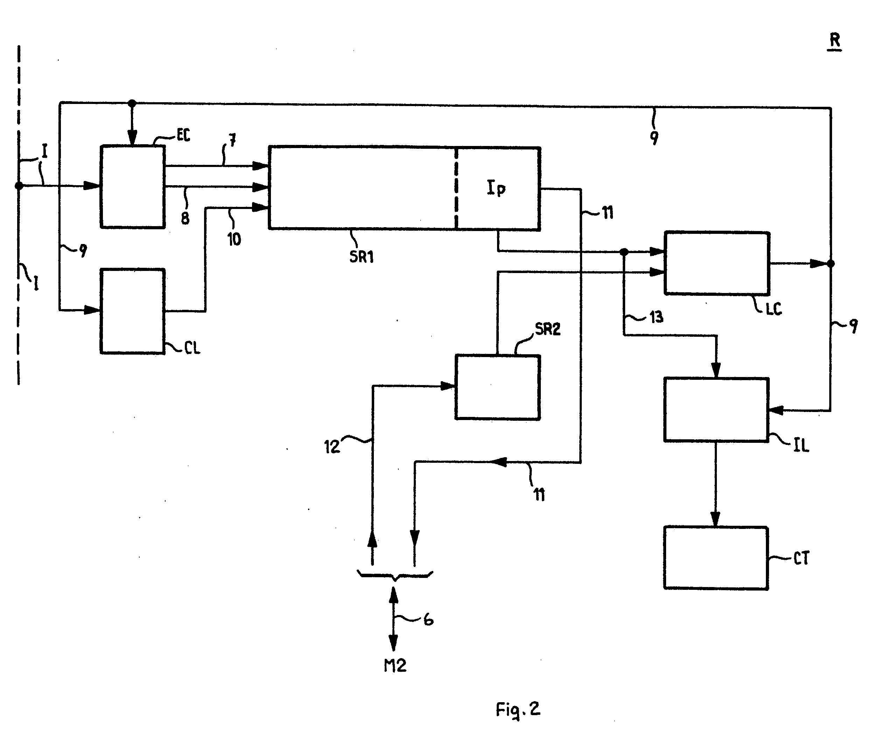

M2 is bidirectionally connected to inserting circuit ID2, to device R by means of connection 6 (R will be examined in details in connection to Fig. 2), and by means of the connection denoted by rs to a data network RD.

References M2', M2" denote two modems identical to M2 and connected respectively by means of connections rs', rs" to data network RD.

References R', R" denote devices identical to R. Devices R, R', R" receive all, by means of a bus denoted by I, the flow of information and the corresponding fast timing coming from a data-base, denoted by BD.

As shown in the drawing, blocks ID2', M2', R' and ID2", M2", R" are connected in the same way as blocks ID2, M2 and R already examined.

It is clear however that the number of subscribers, connected to lines L, that can be served is not limited to the three cases of subscribers connected to lines L, L', L" represented in the drawing, by way of example, but it is equal at least to the total number of subscribers connected to telephone exchange RT.

All the information coming from the various sources of information denoted by $S_1$, $S_2$, ... $S_n$ are conveyed to data-base BD.

BD is capable of organizing the information in pre-determined formats, duly labelled, so as to make retrieval possible.

More particularly, BD splits the total data flow into a high number of pages, each corresponding to a frame of the television type, equipped with the corresponding address.

Such data flow is cyclically transmitted onto bus I at a rate that for instance can be of 10 seconds and is transmitted by bus I to all devices R.

If for instance such flow is transmitted at a speed of 140 Mbit/s with easy computations it can be deduced that it is possible to store in BD a quantity of about 450.000 pages each of them consisting of 24 rows and 40 characters per row, under the hypothesis that 7-bit coded characters are utilized and the page is half-filled.

Data bases of type BD are well known in the art, and for the purposes of the present invention, its internal organization, the way used to structure the information, and the structure (coaxial cable, optical fibre ...) of bus I onto which BD conveys the information flow are of no interest.

In Fig. 2 reference I denotes the same bus as in Fig. 1, carrying the cyclical information flow and its timing signal.

Reference EC denotes a usual synchronism extracting circuit, able to separate the fast timing signal from the total information flow, it receives from bus I, and to separately emit on wires 7 and 8 respectively the information flow and the relevant fast timing signal, for instance at 140 MHz. EC is also able to block its outputs when it receives a suitable disable order from wire 9.

Reference CL denotes a usual timing signal generator apt to be enabled by the command present on wire 9, the same that operates as disabling command for EC, in order to emit on wire 10 a slow timing signal, for instance at 8 KHz.

Reference SR1 denotes a usual shift register, able to store temporarily the contents of a page (with its address) corresponding to a frame of the television type of the data flow it serially receives from wire 7.

Reference $I_p$ denotes a particular area of SR1 designed to store the address of the page stored in SR1.

When EC is enabled and CL is disabled the bits corresponding to the information flow coming from wire 7 are serially stored in SR1.

The load of SR1 occurs with loss, that is once the register is complete, each new bit determines the loss of the oldest bits; in this way the flow of information that cyclically flows into bus I goes also through SR1, without interesting the output, connected to wire 11.

When on the contrary, EC is disabled and CL is enabled, the quick load of the bits coming, by EC and wire 7, from bus I is stopped at once and the slow unload starts of the bits stored in SR1 towards the output connected to modem M2 (Fig. 1), through wire 11 and connection 6, on the basis of the slow timing signal coming from CL (Fig. 2), through wire 10.

Reference SR2 denotes a usual shift register able to store the address, it receives from modem M2 (Fig. 1) through connection 6 and wire 12 (Fig. 2), corresponding to the page selected by the subscriber by means of keyboard TS (Fig. 1).

Reference LC denotes a usual comparison logic connected to SR2 and $I_p$ at the input, able to compare the bit configuration corresponding to the page address stored in the zone $I_p$ of SR1, with the one, corresponding to the address selected by the subscriber and stored in SR2.

If the two addresses coincide LC emits at the output on wire 9 the command already examined acting as a block for EC and as enabling signal for CL, what entails, as mentioned, the storage block is SR1 of high speed data, coming from bus I through EC and wire 7, and as enable signal to the low-speed serial transfer towards modem M2, through wire 11 and connection 6, of the data corresponding to a page of information stored in SR1.

**0 029 246**

It has now to be outlined that the kind of service required by the subscriber, based on the digital code dialled on keyboard TS (Fig. 1) or on the keyboard of terminal TU, determines in M2 whether the connection must go on towards data network RD by means of connection rs, or towards data-base BD by means of connection 6 of device R and bus I. In both cases the usual telephone service from and towards the subscriber is ensured by means of insertion circuit ID1, connected to telephone T by means of connection 3, and in the exchange by means of analogous circuit ID2, connected to the line circuit AU of the telephone exchange RT by means of connection 5.

Whenever a different charge is requested for the offered service, according for instance to the type and number of pages selected by the subscriber, the page address can be utilized contained in the $I_p$ zone of SR1 to determine the amount to charge on the single subscriber. To this aim in Fig. 2 there is shown one among many possible ways of service charge, basically consisting in the use of a logic interface IL, whose input is connected, by means of connection 13, to the output of register SR1, corresponding to zone $I_p$, and whose output once it is enabled by the command, present on wire 9 at the output of LC, supplies the basis for the due counting information to the charging unit CT that can, for instance, make part also of telephone exchange RT.

The design of an interface such as IL presents no problem to the skilled in the art.

The operation of the information broadcasting system, object of the invention is now described.

The subscriber wishing a piece of information, for instance one among the information supplied by data-base BD, begins by selecting the page containing the general subject index, that in turn refers to further detailed indexes till the desired information is obtained.

To effect this operation on keyboard TS, or on a suitable terminal TU, in case the subscriber does not want to utilize television set TV; he selects a suitable digital code, independent of the fact that telephone T is in resting or in working contact.

Through adapter A, in case keyboard TS was used, through modem M1 and inserting circuit ID1 and analogue signal corresponding to the chosen code is sent onto line L.

Said signal is separated by ID2 from the possible speech signal present on L and sent to modem M2 that is able to reconstruct the digital code selected first on TS and to establish whether the connection with data-base BD or with data network RD has been demanded. Let us suppose that the demand relates to BD as well as to bus I; in this case said code is serially loaded on register SR2 (Fig. 2).

The whole information supplied and organized by data-base BD is cyclically present at high speed (e.g. at 140 Mbit/s) on bus I; all the most recent data present on bus I consistently with the register capacity, are stored in register SR1 instant by instant.

Obviously, to allow retrieval each data block (for instance a page) is preceded by an address under the format of a label that can be distinguished from the remaining data.

As soon as comparison logic LC finds out the address identity between the contents of SR2 and that of zone $I_p$ of SR1 there is blocked, in the way previously examined through the command sent onto wire 9, the subsequent load at high speed of SR1 and the serial unload at low speed of the same SR1 is enabled, said SR1 now stores the page selected towards modem M2 through wire 11 and connection 6 and then towards the subscriber that has made the request through connection 4 (Fig. 1), ID2, L, ID1 connection 2, M1, connection 1, terminal TU or adapter A and television set TV.

In this phase adapter A has the following functions:
— temporaneous memory of the page considered;
— cyclical scanning of said memory with a period equal to the repetition period of the television frame of TV;
— generation of characters under television format.
— television modulator VHF or UHF or at intermediate frequency F1 or in base band, in order to access television set TV.

The selected page is thus displayed on TV and it stays so till a new order is emitted through keyboard TS.

If on the contrary the subscriber wishes to access the special data network RD, he selects on keyboard TS or on a terminal TU, in case he does not intend to use the television set, a suitable digital code that is sent as already seen to modem M2, where it is recognized, enabling then connection rs between M2 and RD and disabling connection 6 between M2 and R.

Network RD, once it has recognized that the service request is addressed to it, remains bidirectionally connected to the subscriber through connection rs, modem M2, connection 4, insertion circuit ID2, line L, ID1, connection 2, M1, connection 1, adapter A, television set TV or subscriber's terminal TU.

Also in this case a usual telephone connection from and towards the subscriber can take place along line L, independent of the connection in progress with RD, based on the operation, already examined, of inserting circuits ID1, ID2 and on the fact that modems M1, M2 operate in a band different from the speech-band.

**Claims**

1. System for receiving information from a data bank (BD) by means of the telephone network via the subscriber telephone loops (L) which extend between the subscribers' sets and an exchange, in a frequency band outside the speech frequency band independently of and, if required, at the same time as the usual telephone traffic, wherein at both ends of each of the loops an information separating or combining filter (ID1, ID2), respectively, connects the loop for the outside of speech frequency band to a first or a second modem (M1, M2), respectively, characterized in that the information which is subdivided into individual pages each identified by its own address is cyclically broadcast by the data bank (BD) onto a single bus (I) common to all subscribers, the bus being connected to each of the respective second modems (M2) via a selecting buffer device (R) having means for temporarily storing the successive pages of the information on the bus, receiving from the subscriber via the modems and the loop the address of a selected page, keeping only the selected page and sending at low speed said page to the subscriber.

2. System according to claim 1, characterized in that the selecting buffer device (R) determines the charge elements of the offered service.

3. System according to claim 2, characterized in that said selecting buffer devices (R) basically consist of:

— a first shift register (SR1) apt to effect the fast load of the data coming from said bus (I) to the maximum capacity of a page of information and of its corresponding address, a portion ($I_p$) of said register being designed to store the address of said page;

— a second shift register (SR2) able to store a digital code, corresponding to the page address, said code being selected by the subscriber and sent to said second register (SR2) through: said subscriber's loop (L), the pair of separating and combining filters (ID1, ID2), and the pair of modems (M1, M2);

— a synchronism extracting circuit (EC) apt both to separate a fast-timing signal from the global flow of data information present on said bus (I), to which it is connected at the input, and to emit at the output towards said first register (SR1) separately the data flow and the fast-timing signal for loading the same;

— a generator (CL) of slow-synchronism signal apt to generate, upon a suitable command, a slow synchronism signal towards said first register (SR1) for the slow retrieval of the data stored in it towards the exchange-end modem (M2);

— a comparison logic (LC) able to mutually compare said page addresses stored in said first (SR1) and second (SR2) shift registers, and in case they are coincident to send a command to the synchronism extracting circuit (EC) to stop in said first register (SR1) said fast data storage, said command being also sent to said timing signal generator (CL) to start in said first register (SR1) the slow retrieval of the page data stored in it, and to a logic interface (IL);

— the logic interface (IL) being able to recognize the page address stored in said portion ($I_p$) of said first register (SR1), to determine the elements useful to the charge and send them to charging circuits (CT) upon reception of said command signal emitted by said comparison logic (LC).

## Patentansprüche

1. System für den Empfang von Information von einer Datenbank (BD) mit Hilfe des Fernsprechnetzes über die Teilnehmer-Fernsprechschleifen (L), die sich zwischen dem jeweiligen Teilnehmergerät und einer Vermittlungsstelle erstrecken, in einem Frequenzband außerhalb des Sprachfrequenzbands unabhängig vom und, falls erforderlich, gleichzeitig mit dem normalen Fernsprechverkehr, wobei an den beiden Enden jeder der Schleifen ein Informations- Trenn- bzw. -Zusammenfüge-Filter (ID1, ID2) die Schleife für das außerhalb der Sprachfrequenz liegende Band mit einem ersten bzw. einem zweiten Modem (M1, M2) verbindet, dadurch gekennzeichnet, daß die Information, die in einzelne, jeweils durch ihre eigene Adresse identifizierte Seiten unterteilt ist, von der Datenbank (BD) zyklisch auf eine einzige Sammelleitung (I) gesendet wird, die für alle Teilnehmer gemeinsam ist und die mit jedem der betreffenden zweiten Modems (M2) über eine selektierende Puffereinrichtung (R) verbunden ist, welche eine Einrichtung zum vorübergehenden Speichern der aufeinanderfolgenden Seiten der auf der Sammelleitung liegenden Information aufweist, vom Teilnehmer über die Modems und die Schleife die Adresse der gewählten Seite empfängt, nur die gewählte Seite festhält und sie mit niedriger Geschwindigkeit an den Teilnehmer sendet.

2. System nach Anspruch 1, dadurch gekennzeichnet, daß die selektierende Puffereinrichtung (R) die Gebührenelemente des angebotenen Dienstes festlegt.

3. System nach Anspruch 2, dadurch gekennzeichnet, daß die auswählende Puffereinrichtung (R) im wesentlichen aus folgenden Einzelschaltungen besteht:

— einem ersten Schieberegister (SR1), das ein schnelles Laden der von der Sammelleitung (I) kommenden Daten bis zur Maximalkapazität einer Informationsseite und ihrer entsprechenden Adresse bewirkt und von dem ein Teil ($I_p$) zur Speicherung der Adresse dieser Seite dient;

— einem zweiten Schieberegister (SR2), das einen der Seitenadresse entsprechenden digitalen Code speichert, der vom Teilnehmer gewählt wird und zu diesem zweiten Register (SR2) über folgenden Weg gesendet wird: die Teilnehmerleitung (L), die beiden Trenn- und Zusammenfügefilter (ID1, ID2) und die beiden Modems (M1, M2);

— einer Synchronismusextraktionsschaltung (EC), die sowohl ein schnelles Zeitsteuersignal aus dem gesamten Dateninformationsfluß auf der Sammelleitung (I), mit der sie eingangsseitig verbunden ist, heraustrennt und ausgangsseitig an das erste Register (SR1) getrennt den Datenfluß und das schnelle Zeitsteuersignal zum Laden des Datenflusses abgibt;

— einem Generator (CL) für langsame Synchronismussignale, der ein langsames Synchronismussignal auf einen entsprechenden Befehl hin an das erste Register (SR1) für die langsame Rückgewinnung der darin gespeicherten Daten zum vermittlungsstellenseitigen Modem (M2) erzeugt;

— einer Komparatorlogik (LC), die die im ersten Schieberegister (SR1) und im zweiten Schieberegister (SR2) gespeicherten Seitenadressen miteinander vergleicht und im Fall der Koinzidenz einen Befehl, im ersten Register (SR1) die schnelle Dateneinspeicherung anzuhalten, an die Synchronismusextraktionsschaltung (EC), an den Synchronismussignalgenerator (CL), um im ersten Schieberegister (SR1) die langsame Wiedergabe der darin gespeicherten Seitendaten in Gang zu setzen, sowie auch an eine logische Zwischenschaltung (IL) sendet;

— der logischen Zwischenschaltung (IL), die die im Teil ($I_p$) des ersten Registers (SR1) gespeicherte Seitenadresse erkennt, die für die Gebührenbelastung verwendbaren Adressenelemente feststellt und sie Gebührenbelastungsschaltungen (CT) auf Empfang des von der Komparatorlogic (LC) abgegebenen Befehls hin sendet.

## Revendications

1. Système pour reçevoir des informations d'une banque de données (BD) au moyen du réseau téléphonique sur les lignes téléphoniques d'abonné (L), qui connectent les appareils téléphoniques (T) au central téléphonique, dans une bande de fréquences différente de la bande vocale, de manière indépendante et, si on le désire, en même temps que le service téléphonique normal, où aux deux extrémités de chaque ligne un filtre de séparation ou de combinaison d'information (ID1, ID2) respectivement, connecte la ligne, pour la bande de fréquences différente de la bande vocale, à un premier ou à un second modem (M1, M2), respectivement, caractérisé en ce que les informations, qui sont subdivisées en pages individuelles identifiées par leur adresse, sont distribuées d'une façon cyclique par la banque de données (BD) sur un bus unique (I) commun à tous les abonnés, le bus étant connecté à chacun des respectifs seconds modens (M2) par l'intermédiaire d'un dispositif de sélection à mémoire tampon (R) qui comprend des moyens pour stocker temporairement en mémoire les pages successives d'information sur le bus, pour recevoir de l'abonné, par l'intermédiaire des modens et de la ligne, l'adresse d'une page sélectionée, pour emmagasiner en mémoire seulement la page sélectionnée et envoyer à faible vitesse cette page à l'abonné.

2. Systeme selon la revendication 1, caractérisé en ce que le dispositif de sélection à mémoire tampon (R) établit les éléments de tarification du service offert.

3. Systeme selon la revendication 2, caractérisé en ce que ledit dispositif de sélection à mémoire tampon (R) est essentiellement constitué par:

— un premier registre de décalage (SR1) apte à effectuer le chargement rapide des données provenant de ce bus (I) jusqu'à la capacité maximale d'une page d'information, et de l'adresse relative, une portion ($I_p$) de ce registre étant destinée au chargement de l'adresse de cette page;

— un second registre de décalage (SR2) apte à mémoriser un code numérique, correspondant à l'adresse d'une page, ce code étant sélectionné par l'abonné et envoyé audit second registre (SR2) au moyen de la ligne d'abonné (L), la paire de filtres de séparation et combinaison (ID1, ID2) et la paire de modens (M1, M2);

— un circuit pour l'extraction du synchronisme (EC); apte à séparer un signal de temporisation rapide du flux global des données d'information présent sur ce bus (I) auquel il est connecté en entrée, et à émettre séparément en sortie vers ce premier registre (SR1) le flux des données et le signal de temporisation rapide pour les charger en mémoire;

— un générateur de signaux de synchronisme lent (CL), apte à engendrer, d'après une commande appropriée, un signal de synchronisme lent vers ce premier registre (SR1) pour le déchargement lent des données qui y sont mémorisées vers le modem (M2) du côté central;

— une logique de comparaison (LC) apte à comparer entre elles lesdites adresses de page, contenues dans ces premier (SR1) et second (SR2) registre de décalage et, au cas où il y a coincidence, à envoyer une commande au circuit pour l'extraction du synchronisme (EC) pour bloquer dans ce premier registre (RS1) le stockage rapide de données; cette commande étant également envoyée au générateur de signaux de temporisation (CL) pour commencer dans ce premier registre (SR1) le déchargement lent des données de page qui y sont mémorisées, et à une interface logique (IL);

— l'interface logique (IL) étant apte à reconnaître l'adresse de page mémorisée dans cette part ($I_p$) de ce premier registre (SR1), à en déterminer les éléments utiles pour la tarification et à les transférer aux circuits de tarification (CT) d'après le réception du signal de commande émis par la logique de comparaison (LC).

Fig. 1

Fig. 2